# EUROPÄISCHE PATENTANMELDUNG

(11) **EP 1 578 149 A2**
(43) Veröffentlichungstag der Anmeldung: **21.09.2005**
(21) Anmeldenummer: 05004408.0
(22) Anmeldetag: 01.03.2005
(51) Int. Cl.: H04Q 3/00

(54) **Telekommunikationssystem, Verfahren zur Konfiguration und Verfahren zum Betrieb eines Telekommunikationssystems**

(30) Priorität: 17.03.2004 DE 102004013316
(71) Anmelder: Tenovis GmbH & Co. KG, 60326 Frankfurt am Main (DE)
(72) Erfinder: Rodewald, Frank, 50181 Bedburg (DE)
(74) Vertreter: Thul, Hermann

(57) **Zusammenfassung**

In einem Telekommunikationssystem (40; 50; 60) mit an eine Telekommunikationsanlage (12'; 12"; 12''') angeschlossenen Endgeräten (34', 36', 38'; 34", 36", 38"; 34"', 36"', 38"'), ist ein Endgerät an eine Zugangseinheit (28'; 28"; 68) angeschlossen, welche über ein Fernübertragungsnetzwerk mit der Telekommunikationsanlage verbunden ist, wobei das Fernübertragungsnetzwerk eine drahtlose Übertragungsstrecke (44; 55; 64) aufweist.

## Beschreibung

Die Erfindung betrifft ein Telekommunikationssystem, Verfahren zur Konfiguration und Verfahren zum Betrieb eines Telekommunikationssystems, wobei mehrere Kunden mit jeweils einer Vielzahl von Endgeräten das Telekommunikationssystem unabhängig voneinander nutzten können.

Telefonanlagen stellen den an sie angeschlossenen Teilnehmern bzw. Endgeräten Leistungsmerkmale zur Verfügung. Große private Telekommunikationsanlagen erreichen heute Ausbaustufen von über 10.000 Teilnehmern. Werden diese Telekommunikationsanlagen vernetzt, z.B. über QSIG, so können Kommunikationssysteme entstehen, deren beherrschbare Teilnehmerzahl nur noch durch die maximal zulässige Länge der signalisierbaren Rufnummern begrenzt wird. Telekommunikationsanlagen dieser Größenordnungen bieten nicht nur ein breites Spektrum von vermittlungstechnischen Leistungsmerkmalen, welches die Möglichkeiten kleiner Telekommunikationssysteme bei Weitem übersteigt, sie bieten darüber hinaus Zugang zu serverbasierten Applikationen wie CTI (Computer Telephony Integration), CRM (Customer Relations Management) und Call Center.

Die Leistungsmerkmale der Telefonanlagen sind unterschiedlich aufwändig zu implementieren. Komplizierte vermittlungstechnische Leistungsmerkmale und serverbasierte Applikationen erfordern einen großen Realisierungsaufwand, der sich für kleinere Anschlusszahlen oft als unwirtschaftlich erweist, so dass derartige Leistungsmerkmale in kleinen Anlagen nicht oder nur selten zu finden sind. Es bestehen daher Ansätze, die Leistungsmerkmale großer Telekommunikationsanlagen für viele Kunden mit jeweils eigenen Teilnehmergruppen zentral bereitzustellen und so die Kosten der Leistungsmerkmale pro Teilnehmer in wirtschaftliche Bereiche zu führen. Zwei bekannte Ansätze dazu sind der Centrex Service im öffentlichen Netz der Deutschen Telekom AG in Deutschland, sowie der "Multi-Company"-Ansatz im Bereich der privaten Telekommunikationsanlagen.

Bei dem Dienst Centrex werden typische Leistungsmerkmale privater Telefonanlagen vom öffentlichen Netzbetreiber für viele Kunden zentral bereitgestellt. Der Dienst benutzt Eigenschaften privater Telefonanlagen und Eigenschaften des öffentlichen Netzes. Die Netzwerkintelligenz, d.h. die Steuerung der Leistungsmerkmale ist im öffentlichen Netzwerk und die Schnittstelle zwischen öffentlichem Netzwerk und privatem Netzwerk ist an einem virtuellen Ort mit der Funktion eines Gateways innerhalb des öffentlichen Netzes.

Der Multi-Company Ansatz im Bereich privater Netze basiert auf einer Telefonanlage an einem einzelnen Ort. In einer großen Einrichtung wird das Kommunikationssystem des Gebäudes oder der Einrichtung betrieben durch einen Netzwerkbetreiber wie die Anmelderin oder wie die Regus-Corporation, UK. Die Netzwerk-Intelligenz ist in dem privaten Netzwerk auf dem Campus und der Übergang zum öffentlichen Netzwerk ist auch auf dem Campus. Das private Netzwerk kann mehrere private Telefonanlagen enthalten. Mehrere rechtlich unabhängige Kunden oder Mandanten können auf einer Telefonanlage eingerichtet werden. Ein Administrator des Netzwerkbetreibers der Einrichtung, der die Telefonanlage betreibt, implementiert vom Mandanten ausgewählte Leistungsmerkmale und stellt sie den Teilnehmern des Mandanten bereit. Die privaten Telefonanlagen nach dem Stand der Technik sind nicht konzipiert für eine derartige Benutzung, und daher ist es nicht möglich, alle möglichen Kombinationen von Leistungsmerkmalen für die einzelnen Mandanten individuell und simultan einzurichten. Daher bietet der Betreiber des Campus Netzwerkes Pakete von Leistungsmerkmalen an, die simultan eingerichtet und betrieben werden können. Bei einem bestehenden System ist die Anzahl der einrichtbaren Firmen auf 64 begrenzt und die Telefonanlage kennt den Begriff der Firma bzw. des Mandanten oder Kunden nicht. Dort erfolgt die vermittlungstechnische Abgrenzung der Kunden voneinander durch Anpassung bestehender Leistungsmerkmale, z.B. die Bildung von Verkehrsgruppen.

Zum Sprachgebrauch sei angemerkt, dass im Bereich der Telefonierdienste "Kunde" und "Mandant" sich entsprechen, wobei deren jeweils mehreren Teilnehmern jeweils ein Endgerät entspricht, wobei es aus der Perspektive der Anlage eine eindeutige Teilnehmeranschlussleitung zur Identifikation des Endgeräts und somit des Teilnehmers gibt. In der Vermittlungstechnik ist es üblich, den Begriff Teilnehmer gleichwertig für das Endgerät zu verwenden. Mit Hilfe eines Rufnummernplans wird der Zusammenhang zwischen der Teilnehmeranschlussleitung eines Endgeräts und der internen Rufnummer des Teilnehmers hergestellt.

Des Weiteren ist es bekannt, Telekommunikationsanlagen in einem Verbund von Telekommunikationsanlagen zu betreiben, wobei dieser Verbund durch digitale Verbindungsleitungen zwischen den einzelnen Telekommunikationsanlagen hergestellt wird. Als vermittelndes Protokoll wird auf diesen Leitungen entweder ein standardisiertes Protokoll (QSIG, DPNSS1) oder ein proprietäres Protokoll (TNET, CORNET...) eingesetzt. Telekommunikationsanlagen in einem Verbund haben Vorrichtungen, um die Benutzung der Leitung pro Verbindung und Verbindungsdauer zu tarifieren. Nach dem Stand der Technik besteht ein Verbund aus privaten Telekommunikationsanlagen, die alle einem einzigen Kunden zugeordnet sind.

Den bekannten Lösungen zum mandantenbezogenen Betrieb aus dem Bereich der privaten Telekommunikationsanlagen ist die Einschränkung gemeinsam, dass Mobilitätsaspekte nicht bei der Systemplanung berücksichtigt wurden, sondern bestehende Funk-Netze mitbenutzt wurden. Durch die damit zwangsweise einhergehende Benutzung von mobilen Endgeräten eines anderen Netzes, des Funk-Netzes, stehen Leistungsmerkmale des leitungsgebundenen Netzes bisher nur eingeschränkt zur Verfügung, nämlich soweit sie von dem Netzwerk übertragen werden und auf den Endgeräten darstellbar sind.

Die Nachteile der bestehenden Systeme zeigen sich in folgendem Szenario. Ein Außenmitarbeiter einer Firma hat eine komplett andere technische Büroumgebung, je nachdem, ob er sich innerhalb oder außerhalb des firmeninternen Bürogebäudes befindet.

Im Falle, dass er ein Büro in einem fremden Bürogebäude nutzt:
- muss er die Telekomunikatiosausrüstung dieser Firma nutzen, und deren Bedienung und deren Funktionen erlernen;
- muss er seine Kollegen mit öffentlichen Langrufnummern erreichen, die er sonst mit Kurzrufnummern anwählt;
- müssen seine Kollegen ihn mit einer vom derzeitigen Standort abhängigen Langrufnummer anrufen, obwohl er firmenintern über eine Kurzrufnummer erreichbar ist;
- muss er ggf. eine Fax-Möglichkeit finden, mit wieder anderer Rufnummer;
- muss er ggf. einen Datenanschluss für seinen PC oder andere Geräte finden, ggf. wieder mit anderen Rufnummern;

Im Falle, dass er sich in einem Auto, Bus, LKW, Bau- oder Wohncontainer, usw. befindet:
- muss er ein Handy benutzen und für Fax- und Datenanwendungen seinen PC /PDA / ... in geeigneter Form mit seinem Handy verbinden, sofern dieses das unterstützt. Insbesondere letzteres erfordert einen geschulten Umgang.
- muss er seine Kollegen mit öffentlichen Langrufnummern erreichen, die er sonst mit Kurzrufnummern anwählt;
- müssen seine Kollegen ihn unter der Handy-Rufnummer anrufen, obwohl er firmenintern über eine Kurzrufnummer erreichbar ist.

Es ist daher die Aufgabe der vorliegenden Erfindung, in einem mandantenfähigen Telekommunikationssystem mobile Telekommunikationslösungen zu schaffen, die die Leistungsmerkmale des Telekommunikationssystems zur Verfügung stellen.

Diese Aufgabe wird durch die Vorrichtung und die Verfahren mit den Merkmalen der unabhängigen Patentansprüche gelöst. Bevorzugte Ausgestaltungen der Erfindung ergeben sich aus den abhängigen Ansprüchen.

Eine mandantenfähige Telekommunikationsanlage wird entsprechend einem Service-Provider Konzept von mehreren Kunden mit einer Vielzahl von Endgeräten unabhängig voneinander genutzt, wobei jeder Kunde seine Endgeräte in Gruppen zusammenfassen kann, wobei alle Endgeräte einer Gruppe durch eine gemeinsame eindeutige Zugangsidentifikation gekennzeichnet sind. Dabei entsprechen die jeweiligen Gruppen von Endgeräten entweder einzelnen Niederlassungen und/oder organisatorischen Einheiten eines Kunden, oder ein Kunde selbst entspricht einem Service-Provider, wobei dann die Gruppen von Endgeräten den Kunden des Service-Providers entsprechen. Dabei verfügt die Telekommunikationsanlage über Mittel zum Speichern von Kundenidentifikationsnummern aller beteiligter Kunden und Zugangsidentifikationsnummern aller Endgerätegruppen. Dabei werden Kundenidentifikationsnummer und Zugangsidentifikationsnummer aus den E.164 Rufnummern der Endgeräte ermittelt, bzw. aus auswertungsrelevanten Teilen davon. Diese mandantenfähige Nebenstellenanlage hat vorzugsweise kundenindividuelle Rufnummernpläne, die je Kunde in endgerätegruppenindividuelle Rufnummernpläne unterteilt werden, wobei eine Nebenstellenrufnummer in der mandantenfähigen Telekommunikationsanlage mehrfach vergeben sein kann, und zwar max. einmal für jede Endgerätegruppe jedes Kunden. Verbindungen zwischen Endgeräten verschiedener Gruppen können dabei, auch kundenübergreifend, sowohl vollständig innerhalb der Nebenstellenanlage als auch über das öffentliche Netz abgewickelt werden.

Die Anmelderin hat eine private Vermittlungsanlage entwickelt, bei der mehrere Kunden mit jeweils einer Vielzahl von Endgeräten die Vermittlungsanlage unabhängig voneinander nutzten können, so als wäre nur ein einziger Kunde auf der privaten Vermittlungsanlage eingerichtet. Diese private Vermittlungsanlage stellt virtuelle private Telekommunikationsanlagen mit jeweils einer eigenen Datenhaltung und einer eigenen Datenzugriffsstruktur für jeden Kunden bereit. Eine solche virtuelle Anlage kann jedem Kunden bzw. Mandanten zugeordnet werden, und damit sind dessen Teilnehmer unabhängig und organisatorisch getrennt von den Teilnehmern anderer Kunden. Jeder Kunde hat einen kundenindividuell frei gestaltbaren durch den Kunden einrichtbaren Kunden-Rufnummernplan zur Verfügung. Ein solches Kommunikationssystem kann auf der Basis einer privaten Telekommunikationsanlage eine beliebige Anzahl von Kunden mit jeweils einer beliebigen Anzahl von Teilnehmern vorsehen. Innerhalb der virtuellen Anlage eines Kunden sind Leistungsmerkmale sowohl kundenweit als auch individuell für dessen Teilnehmer einrichtbar. Dies geschieht weitgehend durch einen Administrator des Kunden selber, z.B. die Vergabe von Teilnehmerberechtigungen, insbesondere im Zusammenhang mit Amtsverkehr oder bei der Nutzung von Leistungsmerkmalen. Die Einrichtung und Änderung von einigen Daten innerhalb der virtuellen Anlage bleibt dem Systemadministrator vorbehalten. Dies ist z.B. die Konfigurierung des Verkehrs zwischen virtuellen Anlagen verschiedener Kunden und das Freischalten und Sperren von Hardwareadressen. In dieser privaten Vermittlungsanlage ist jedem Kunden eine Kundenidentifikationsnummer zugeordnet. Die Kundenidentifikationsnummer ermöglicht die kundenindividuelle Einrichtung virtueller Telefonanlagen.

Ein erfindungsgemäßes Telekommunikationssystem hat an eine Telekommunikationsanlage angeschlossene Endgeräte, wobei ein Endgerät an eine Zugangseinheit angeschlossen ist, welche über ein Fernübertragungsnetzwerk mit der Telekommunikationsanlage verbunden ist, wobei das Fernübertragungsnetzwerk eine drahtlose Übertragungsstrecke aufweist. Damit kann das Endgerät den vollen Funktionsumfang der Telekommunikationsanlage nutzen.

Weitere vorteilhafte Ausführungsformen ergeben sich aus den weiteren Unteransprüchen und aus der nachfolgenden Beschreibung eines bevorzugten Ausführungsbeispiels, das anhand der Abbildungen näher erläutert wird. Hierbei zeigen:
FIG. 1 eine schematische Darstellung eines mandantenfähigen Telekommunikationssystems auf der Basis privater Telekommunikationsanlagen;
FIG. 2 eine schematische Darstellung eines Telekommunikationssystems gemäß der Erfindung;
FIG. 3 eine schematische Darstellung einer Ausgestaltung des Telekommunikationssystems gemäß der Erfindung;
FIG. 4 eine schematische Darstellung einer weiteren Ausgestaltung des Telekommunikationssystems gemäß der Erfindung.

Einander entsprechende Funktionselemente in verschiedenen Zeichnungen sind mit gestrichenen Bezugszeichen bezeichnet.

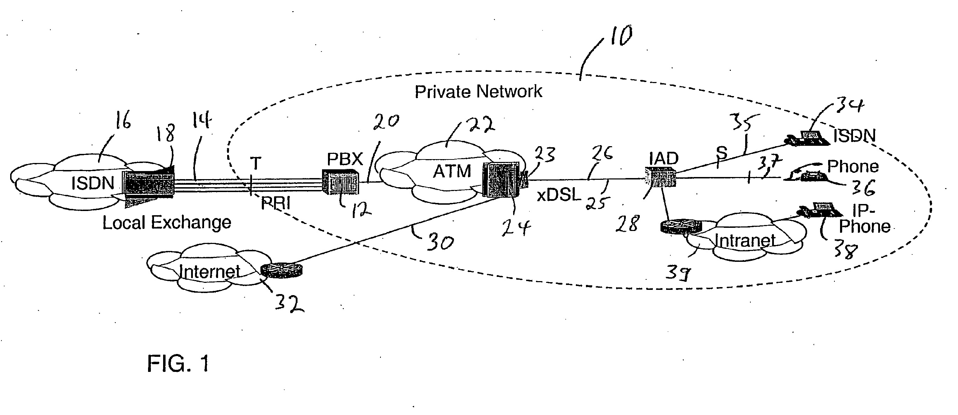

FIG. 1 zeigt ein mandantenfähiges Telekommunikationssystem 10 auf der Basis privater Telekommunikationsanlagen. Eine zentrale Telekommunikationsanlage PBX (Private Branch Exchange) 12 ist über eine Leitung 14 an ein öffentliches Netz ISDN 16 angeschlossen. Dies geschieht über ein Primary Rate Interface PRI zu einer Vermittlungsstelle 18 des öffentlichen Netzes mit einer Übergabestelle T. Aufgrund der Basis einer privaten Telekommunikationsanlage wird das Telekommunikationssystem 10 als privates Netzwerk (Private Network) angesehen. Die zentrale Telekommunikationsanlage PBX 12 ist über eine Leitung 20 an ein ATM Netzwerk 22 angeschlossen. Vom ATM Netzwerk 22 verläuft eine DSL (Digital Subscriber Line) Verbindung 25 über eine Leitung 26 zu einer Zugangseinheit, Endgeräte-Anschlusseinrichtung (Integrated Access Device IAD) 28. Die Endgeräte-Anschlusseinrichtung ist die Zugangseinheit für ein Endgerät zum Telekommunikationsnetzwerk.

Die Anschaltung von DSL an das ATM-Netz erfolgt über einen DSLAM (DSL-Access-Multiplexer) 23. Ein Gateway 24 verbindet das Telekommunikationssystem 10 über Leitung 30 mit dem Internet 32. An die Anschlusseinrichtung 28 sind als Endgeräte ein ISDN-Telefon 34 über Leitung 35 mit Übergabepunkt S, ein analoges Telefon 36 über Leitung 37 und ein IP-Telefon (IP= Internet Protocol) 38 über ein Intranet 39 angeschlossen. Die Telefone 34, 36, 38 sind Beispiele für Endgeräte. Telekommunikationsanlagen, Gateway-Server, Anschlusseinrichtungen und Endgeräte können in beliebiger Anzahl im Netzwerk vorhanden sein. Dabei bilden die Verbindungen zwischen Telekommunikationsanlage PBX 12 und Endgeräte-Anschlusseinrichtung IAD 28 ein Fernübertragungsnetzwerk.

Das Service Provider Konzept ermöglicht es, Gruppen von Mitarbeitern (oder auch einzelne) einer Firma auf beliebige Standorte zu verteilen, ohne dass diese auf den Komfort einer großen Telekommunikationsanlage verzichten müssen. Dabei sind die Endgeräte nicht mehr direkt an die Telekommunikationsanlage angeschaltet, sondern an eine Anschlusseinrichtung (IAD), welche wiederum über DSL an ein weit verbreitetes Fernübertragungsnetzwerk (ATM oder IP) angeschaltet ist.

Dabei gibt es die Einschränkung, dass der ausgewählte Standort über einen DSL-Anschluss verfügen muss, was insbesondere in ländlichen Gegenden oder auch außerhalb von Gebäuden in der Regel nicht möglich ist, bzw. bei ständig wechselnden Standorten (kurze Aufenthalte) verwaltungstechnisch sehr aufwendig ist.

Ein solches Telekommunikationssystem mit an eine Telekommunikationsanlage angeschlossenen Endgeräten, wobei ein Endgerät an eine Zugangseinheit angeschlossen ist, welche über ein Fernübertragungsnetzwerk mit der Telekommunikationsanlage verbunden ist, wird nun erfindungsgemäß um eine drahtlose Übertragungsstrecke im Fernübertragungsnetzwerk erweitert.

Die über eine Anschlusseinrichtung (IAD) angeschaltete Teilnehmergruppe wird dadurch mobil einsetzbar, dass die Verbindung zwischen dem Fernübertragungsnetzwerk (ATM, IP, ...) und der Anschlusseinrichtung (IAD) keine DSL-Festverbindung, sondern eine Funkverbindung ist.

Hierbei sei darauf hingewiesen, dass diese Verfahren nicht an ATM gebunden sind, sondern hier kann ein beliebiges Fernübertragungsnetzwerk zugrunde liegen, z.B. ein IP-Netz. Auch als Funknetz sind beliebige andere breitbandige Funknetze denkbar.

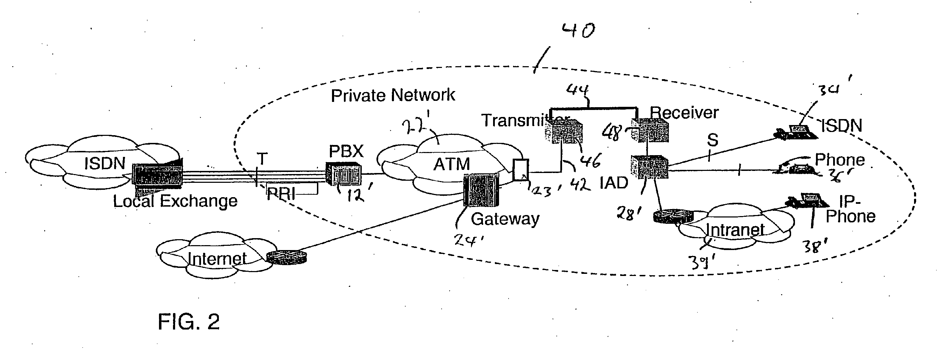

FIG. 2 zeigt ein Telekommunikationssystem 40 gemäß der Erfindung, bei dem viele Elemente aus dem Telekommunikationssystem 10 aus FIG. 1 bekannt sind. In FIG. 2 weist eine DSL-Verbindung 42 eine drahtlose Übertragungsstrecke 44 im Fernübertragungsnetzwerk auf. An den DSLAM 23' wird ein Transmitter 46 angeschaltet, der das DSL Protokoll in das entsprechende Funkprotokoll umsetzt bzw. tunnelt. Auf der Empfangsseite setzt gibt ein mit dem IAD 28' verbundener Receiver 48 das Funksignal wieder in die DSL-Signalisierung um.

Nach einer Ausgestaltung der Erfindung ist die drahtlose Übertragungsstrecke eine WLAN-Verbindung für kleine Distanzen oder eine WMAN-Verbindung für mittlere Distanzen (<50km, WMAN: Wireless Metropolitan Area Network, Wireless Standard 802.16).

Gemäß einer weiteren Ausgestaltung der Erfindung ist es durchaus möglich, auf der Sendeseite oder der Empfangsseite vollständig auf DSL zu verzichten. Auf der Sendeseite kann man dann den DSLAM durch ein Gateway ersetzen, welches die Umsetzung von ATM (oder IP) in ein Protokoll zur Übermittlung zum Transmitter umsetzt, der wiederum die Anpassung an das Funkprotokoll durchführt. Diese beiden Einheiten können auch zusammengefasst werden. Auf der Empfangsseite transformiert der Receiver das Funksignal in ein spezifisches Protokoll, an das über die Access-Box alle Endgeräte angeschaltet werden. Hier ist allerdings vorzugsweise ein IAD mit DSL anzuschließen, da dies eine weit verbreitete und kostengünstige Technik ist.

Eine andere vorteilhafte Ausgestaltung der Erfindung sieht vor, dass die Funk-Sendeeinheit direkt an die Telekommunikationsanlage angeschaltet ist.

Eine weitere vorteilhafte Ausgestaltung der Erfindung sieht vor, dass die Funk-Empfangseinheit in die Zugangseinheit integriert ist.

Nach noch einer Ausgestaltung der Erfindung ist die Zugangseinheit in das Endgerät integriert.

Vorzugsweise sind die Telekommunikationsanlage und die angeschlossenen Endgeräte zur Kommunikation mit einem privaten Signalisierungsprotokoll eingerichtet.

Die über eine Anschlusseinrichtung (IAD) angeschaltete Teilnehmergruppe wird dadurch mobil einsetzbar, dass die Verbindung zwischen dem Fernübertragungsnetzwerk (ATM, IP, ...) und der Anschlusseinrichtung (IAD) keine DSL-Festverbindung, sondern eine Funkverbindung ist. Dies ist gerade in dem Service-Provider-Szenario ein wesentlicher Vorteil.

Weitere Vorteile der Erfindung werden nun in Bezug auf einen Mitarbeiter genannt, wobei sich entsprechende Vorteile auch auf eine Mitarbeitergruppe verallgemeinern lassen. Der Mitarbeiter kann an jedem beliebigen Standort, der sich innerhalb des Funkbereiches befindet, tätig werden. Dies mit dem gewohnten Komfort seiner üblichen Büroumgebung:
Der Mitarbeiter hat die gleiche Ausrüstung wie sonst (Telefon, Fax, PC, ...) mit unveränderter Handhabung;
Der Mitarbeiter kann alle Merkmale der Telekommunikationsanlage nutzen, die er bisher auch nutzen konnte;
Der Mitarbeiter wählt unabhängig von seinem Standort immer die gleichen Rufnummern, die er sonst auch wählt, so z.B. interne Rufnummern (Kurznummern), um beliebige Kollegen an anderen Standorten zu erreichen.

Andere Personen wählen immer die gleiche Rufnummer, um diesen Mitarbeiter zu erreichen, d.h. seine Kollegen wählen nur seine interne Rufnummer, Amtsteilnehmer wählen die Amts-Zugangsrufnummer seiner Firma vorweg.

In mobilen Büros (Bau- oder Wohncontainer, ...) kann eine komplette Büro-Infrastruktur aufgebaut werden, die bei einem Standortwechsel nicht verändert werden muss. D.h. auch Einrichtung, Bedienung und ggf. Anmeldung einzelner Komponenten ändern sich nicht.

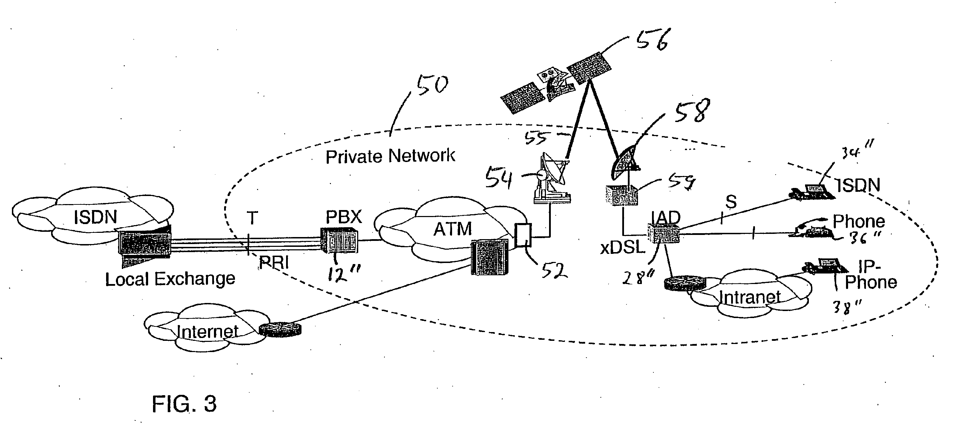

FIG. 3 zeigt eine Ausführungsform eines Telekommunikationssystems gemäß der Erfindung mit einer Anschaltung der Anschlusseinrichtung IAD an das ATM-Netz über "DSL via Satellit". "DSL via Satellit" wird heutzutage schon von einigen Providern angeboten. Viele Provider führen allerdings nur den Down-Link über Satellit und den Up-Link über herkömmliche ISDN-Verbindungen. Für dieses Verfahren ist es jedoch erforderlich, nicht nur den Down-Link, sondern auch den Up-Link über Satellit zu führen.

Das in FIG. 3 gezeigte Telekommunikationssystem 50 gemäß der Erfindung, bei dem wiederum viele Elemente aus den Telekommunikationssystemen 10 aus FIG. 1 und 40 aus FIG. 2 bekannt sind, weist im Fernübertragungsnetzwerk ein Gateway 52 auf, welches die über ATM (oder IP) empfangenen Signale/Daten vom ATM (oder IP) Protokoll in das entsprechende Funkprotokoll umsetzt bzw. tunnelt und mittels einer Sendeantenne 54 über die drahtlose Übertragungsstrecke 55 an einen Satelliten 56 übermittelt. Von dort werden die Daten Richtung Erde abgestrahlt. Über eine Empfangsantenne 58, welche sich in dem durch den Satelliten 56 versorgten Bereich befindet, und einen Konverter 59 werden die Signale von dem Funkprotokoll auf das DSL Protokoll umgesetzt, und entsprechend ist die Endgeräte-Anschlusseinrichtung IAD 28" direkt mit dem Konverter 59 verbunden.

Im Vergleich zum Service Provisioning mit festen Verbindungen sind auf Endgeräteseite als zusätzliche Ausrüstung eine Empfangsantenne und ein Konverter notwendig. Befindet sich die Büroumgebung in einem Fahrzeug, kann sogar während der Fahrt der volle Funktionsumfang genutzt werden. Im Falle von "DSL via Satellit" gibt es Antennen, die sich während der Fahrt automatisch ausrichten, es sei auf EP 111 9073 A2 hingewiesen. Der Vorteil gegenüber der ersten Ausführungsform ist, dass das Empfangsgerät relativ klein gehalten werden kann.

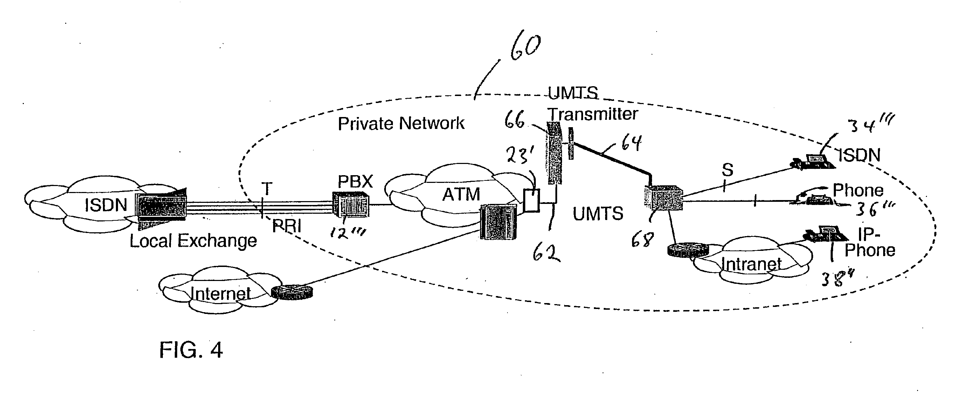

FIG. 4 zeigt eine Ausführungsform eines Telekommunikationssystems 60 gemäß der Erfindung mit einer Anschaltung der Anschlusseinrichtung IAD an das ATM-Netz über UMTS. Im Telekommunikationssystem 60 sind wieder viele Elemente aus den Telekommunikationssystemen 10 aus FIG. 1 und 40 aus FIG. 2 bekannt. In FIG. 4 weist eine DSL-Verbindung 62 eine drahtlose UMTS Übertragungsstrecke 64 im Fernübertragungsnetzwerk auf. An den DSLAM 23" wird ein UMTS Transmitter 66 angeschaltet, der das DSL Protokoll tunnelt. Auf der Empfangsseite setzt ein UMTS Receiver 68 das Funksignal wieder in die DSL-Signalisierung um, und entsprechend ist die Endgeräte-Anschlusseinrichtung IAD direkt mit dem UMTS Receiver 68 verbunden.

Alternativ können die über ATM (oder IP) empfangenen Daten in einem Gateway direkt vom ATM in das UMTS Funkprotokoll transformiert und über eine Sendeantenne abgestrahlt werden. In diesem Fall werden über ein Empfangsgerät (inklusive Antenne), welches sich im Empfangsbereich befindet, die Signale entweder auf DSL umgesetzt, so dass man die Endgeräte-Anschlusseinrichtung (IAD) direkt an das Empfangsgerät anschalten kann, oder das Empfangsgerät wird derart gestaltet, dass die Endgeräte direkt angeschaltet werden können. Letztere Variante benötigt keine Übertragungsstrecke mit DSL Protokoll mehr.

Die UMTS Variante ermöglicht eine besonders kleine Empfangsantenne und eignet sich für Mitarbeiter, die ihre Büroumgebung mit sich "herumtragen" möchten (z.B. in einem Koffer).

Ein Verfahren zur Konfiguration des Telekommunikationssystems mit an eine Telekommunikationsanlage angeschlossenen Endgeräten, wobei ein Endgerät an eine Zugangseinheit angeschlossen ist, welche über ein Fernübertragungsnetzwerk mit der Telekommunikationsanlage verbunden ist, wobei das Fernübertragungsnetzwerk eine drahtlose Übertragungsstrecke aufweist, sieht gemäß der Erfindung die folgenden Verfahrensschritte vor:
- Zuordnen der Ressourcen der Telekommunikationsanlage zur leitungsgebundenen Fernübertragungsstrecke oder direkt zur drahtlosen Übertragungsstrecke;
- Zuordnen der Fernübertragungsstrecke zur drahtlosen Übertragungsstrecke;
- Zuordnen der drahtlosen Übertragungsstrecke oder der leitungsgebundenen Fernübertragungsstrecke zu der Zugangseinheit;
   - Zuordnen der Zugangseinheit zu dem Endgerät.

Ein Verfahren zum Betrieb eines Telekommunikationssystems mit an eine Telekommunikationsanlage angeschlossenen Endgeräten, wobei ein Endgerät an eine Zugangseinheit angeschlossen ist, welche über ein Fernübertragungsnetzwerk mit der Telekommunikationsanlage verbunden ist, wobei das Fernübertragungsnetzwerk eine drahtlose Übertragungsstrecke aufweist, welche der Zugangseinheit zugeordnet ist, hat erfindungsgemäß die Verfahrensschritte
- Schalten der Übertragungsstrecke zwischen der Telekommunikationsanlage und der Zugangseinheit inklusive der enthaltenen drahtlosen Übertragungsstrecke;
- Erhalten eines Anrufs;
- Schalten einer Verbindung von der Telekommunikationsanlage zu dem angeschlossenen Endgerät über die zugeordnete drahtlose Übertragungsstrecke.

### Bezugszeichenliste

Telekommunikationssystem 10
Telekommunikationsanlage PBX 12
Leitung 14
öffentliches Netz ISDN 16
Vermittlungsstelle 18
Leitung 20, 26, 30, 35, 37
ATM Netzwerk 22
DSLAM 23
Gateway 24
DSL Verbindung 25
IAD 28, 28'
Internet 32
Telefone 34, 36, 38
Intranet 39
Telekommunikationssystem 40
DSL-Verbindung 42
drahtlose Übertragungsstrecke 44
Transmitter 46
Receiver 48
Telekommunikationssystem 50
Gateway 52
Sendeantenne 54
drahtlose Übertragungsstrecke 55
Satelliten 56
Empfangsantenne 58
Konverter 59
Telekommunikationssystem 60
DSL-Verbindung 62
UMTS Übertragungsstrecke 64
UMTS Transmitter 66
UMTS Receiver 68

## Patentansprüche

1. Telekommunikationssystem (40; 50; 60) mit an eine Telekommunikationsanlage (12'; 12"; 12"') angeschlossenen Endgeräten (34', 36', 38'; 34", 36", 38"; 34"', 36"', 38"'), wobei ein Endgerät an eine Zugangseinheit (28'; 28"; 68) angeschlossen ist, welche über ein Fernübertragungsnetzwerk mit der Telekommunikationsanlage verbunden ist, wobei das Fernübertragungsnetzwerk eine drahtlose Übertragungsstrecke (44; 55; 64) aufweist.

2. Telekommunikationssystem nach Anspruch 1, wobei die drahtlose Übertragungsstrecke (55) eine Satellitenverbindung aufweist.

3. Telekommunikationssystem nach Anspruch 1, wobei die drahtlose Übertragungsstrecke (64) eine UMTS-Verbindung aufweist.

4. Telekommunikationssystem nach Anspruch 1, wobei die drahtlose Übertragungsstrecke (44) eine WLAN-Verbindung für kleine Distanzen oder eine WMAN-Verbindung für mittlere Distanzen aufweist.

5. Telekommunikationssystem nach einem der Ansprüche 1 bis 4, wobei die Funk-Sendeeinheit direkt an die Telekommunikationsanlage angeschaltet ist.

6. Telekommunikationssystem nach einem der Ansprüche 1 bis 5, wobei die Funk-Empfangseinheit in die Zugangseinheit integriert ist.

7. Telekommunikationssystem nach einem der Ansprüche 1 bis 6, wobei die Zugangseinheit in das Endgerät integriert ist,

8. Telekommunikationssystem nach einem der Ansprüche 1 bis 7, wobei die Telekommunikationsanlage (12'; 12"; 12"') und die angeschlossenen Endgeräte (34', 36', 38'; 34", 36", 38"; 34"', 36"', 38"') zur Kommunikation mit einem privaten Signalisierungsprotokoll eingerichtet sind.

9. Telekommunikationssystem nach einem der Ansprüche 1 bis 8, wobei das Telekommunikationssystem (40; 50; 60) zur Benutzung durch mehrere Kunden unabhängig voneinander eingerichtet ist.

10. Verfahren zur Konfiguration eines Telekommunikationssystems (40; 50; 60) mit an eine Telekommunikationsanlage (12'; 12"; 12"') angeschlossenen Endgeräten (34', 36', 38'; 34", 36", 38"; 34"', 36"', 38"'), wobei ein Endgerät an eine Zugangseinheit (28'; 28"; 68) angeschlossen ist, welche über ein Fernübertragungsnetzwerk mit der Telekommunikationsanlage verbunden ist, wobei das Fernübertragungsnetzwerk eine drahtlose Übertragungsstrecke (44; 55; 64) aufweist, mit den Verfahrensschritten
- Zuordnen der Ressourcen der Telekommunikationsanlage zur leitungsgebundenen Fernübertragungsstrecke oder direkt zur drahtlosen Übertragungsstrecke;
- Zuordnen der Fernübertragungsstrecke zur drahtlosen Übertragungsstrecke;
- Zuordnen () der drahtlosen Übertragungsstrecke oder der leitungsgebundenen Fernübertragungsstrecke zu der Zugangseinheit;
- Zuordnen der Zugangseinheit zu dem Endgerät.

11. Verfahren zum Betrieb eines Telekommunikationssystems (40; 50; 60) mit an eine Telekommunikationsanlage (12'; 12"; 12"')angeschlossenen Endgeräten (34', 36', 38'; 34", 36", 38"; 34"', 36"', 38"'), wobei ein Endgerät an eine Zugangseinheit (28'; 28"; 68) angeschlossen ist, welche über ein Fernübertragungsnetzwerk mit der Telekommunikationsanlage verbunden ist, wobei das Fernübertragungsnetzwerk eine drahtlose Übertragungsstrecke (44; 55; 64) aufweist, welche der Zugangseinheit zugeordnet ist, mit den Verfahrensschritten
- Schalten der Übertragungsstrecke zwischen der Telekommunikationsanlage und der Zugangseinheit inklusive der enthaltenen drahtlosen Übertragungsstrecke;
- Erhalten eines Anrufs;
- Schalten einer Verbindung von der Telekommunikationsanlage zu dem angeschlossenen Endgerät über die zugeordnete drahtlose Übertragungsstrecke.
